Europäisches Patentamt

European Patent Office

Office européen des brevets

(19)

(11) Veröffentlichungsnummer: **0 177 805**
**B1**

(12) # EUROPÄISCHE PATENTSCHRIFT

(45) Veröffentlichungstag der Patentschrift:
25.10.89

(21) Anmeldenummer: 85111653.3

(22) Anmeldetag: 14.09.85

(51) Int. Cl.⁴: **C25D 11/24**, B05D 7/14,
C08L 33/06, C08F 20/12,
C09D 3/81

(54) **Konservierungsmittel für Aluminium-Oberflächen.**

(30) Priorität: 21.09.84 DE 3434668

(43) Veröffentlichungstag der Anmeldung:
16.04.86 Patentblatt 86/16

(45) Bekanntmachung des Hinweises auf die Patenterteilung:
25.10.89 Patentblatt 89/43

(84) Benannte Vertragsstaaten:
AT BE CH DE FR GB IT LI NL SE

(56) Entgegenhaltungen:
EP-A- 0 072 384
DE-A- 1 938 039
DE-A- 2 611 614
DE-A- 3 129 262
DE-B- 2 710 033
GB-A- 1 325 642
US-A- 3 791 943
US-A- 3 961 111
US-A- 4 465 562

(73) Patentinhaber: Henkel Kommanditgesellschaft auf
Aktien, Postfach 1100 Henkelstrasse 67,
D-4000 Düsseldorf-Holthausen(DE)

(72) Erfinder: Osberghaus, Rainer, Dr., Südallee 47,
D-4000 Düsseldorf(DE)
Erfinder: Brodalla, Dieter, Dr., Corellistrasse 105,
D-400 Düsseldorf 13(DE)
Erfinder: Geissler, Roland, Am Thieleshof 38,
D-4006 Erkrath 1(DE)
Erfinder: Bossek, Harald, Wevelinghover Strasse 12,
D-4000 Düsseldorf(DE)

**Beschreibung**

Die vorliegende Erfindung betrifft die Verwendung einer wässrigen Polymerdispersion zur konservierenden Nachbehandlung von anodisierten Aluminiumoberflächen.

Trotz der bekannten Korrosionsbeständigkeit von Aluminium und insbesondere von elektrolytisch oxidiertem Aluminium besteht in Fachkreisen der Wunsch, Aluminiumbauteile, die der Außenbewitterung oder aggresiven Medien ausgesetzt sind, durch einen Konservierenden Überzug zusätzlich zu schützen.

So wird in dem Europa-Patent 0014035 vorgeschlagen, anodisch oxidierter, aber noch nicht oberflächenverdichtetes Aluminium in einen sauren Polymerlatex zu tauchen, der an der Oberfläche des Tauchguts irreversibel eine Polymerschicht abscheidet. Die Nachteile dieses Verfahrens sind darin zu sehen, daß es sich nur direkt nach der anodischen Oxidation anwenden läßt und daß die so beschichteten Gegenstände nicht die durch eine gezielte gleichmäßige Verdichtung der anodisch erzeugten Oxidschicht erreichbare Oberflächengüte aufweisen.

Ein weiteres Verfahren zum Konservieren von Aluminiumoberflächen beschreibt das deutsche Patent 3024727. Dort wird die Verwendung einer metallsalzhaltigen Dispersion mit 10 bis 25 Gewichtsprozent Acrylat-Copolymeren in vollentsalztem Wasser als Konservierungsmittel für eloxierte Aluminiumflächen vorgeschlagen. Die genannte deutsche Patentschrift enthält jedoch nur eine breite unbestimmte technische Lehre, die es dem Fachmann nicht ermöglicht, ohne erfinderisches Zutun Aluminiumteile durch eine gleichmäßige Beschichtung streifenfrei zu konservieren. Auch sind keine Hinweise auf ein hier besonders gewünschtes Tauchverfahren enthalten.

Die Erfinder haben sich die Aufgabe gestellt, hier Abhilfe zu schaffen und ausgehend von der Lehre der genannten deutschen Patentschrift eine Polymer-Dispersion zur Verfügung zu stellen, die sich zur verbesserten gleichmäßigen Konservierung von Aluminiumteilen durch Bestreichen oder Tauchen eignet.

Gegenstand der Erfindung ist somit die Verwendung einer wässrigen Polymerdispersion aus

90 bis 40 Gewichtsprozent Wasser

5 bis 40 Gewichtsprozent eines säuregruppenhaltigen Acrylatcopolymeren mit einer minimalen Filmbildungstemperatur zwischen 30 und 90°C bestehend aus

30 bis 69 Gewichtsprozent Estern der Acrylsäure mit $C_1$ bis $C_8$-Alkoholen und/oder Estern der Methacrylsäure mit $C_4$ bis $C_8$-Alkoholen

30 bis 69 Gewichtsprozent eines oder mehrerer Monomere ausgewählt aus der Gruppe, die Styrol und die Ester der Methacrylsäure mit $C_1$-$C_3$-Alkoholen umfaßt.

1 bis 15 Gewichtsprozent eines säuregruppenhaltigen Comonomeren ausgewählt aus der Gruppe Acrylsäure, Methacrylsäure, Maleinsäurehalbester, Itaconsäure und/oder 2-Acrylamido-2-methylpropansulfonsäure und/oder deren Alkali- oder Ammoniumsalzen

0,5 bis 3 Gewichtsprozent organischen Salzen zweibindiger Metalle

0,5 bis 5 Gewichtsprozent nichtflüchtigen, permanenten Weichmachern

1 bis 25 Gewichtsprozent flüchtigen Weichmachern 0,2 bis 5 Gewichtsprozent anionischen und/oder nichtionischen Tensiden, von denen bezogen auf Gesamtdispersion 0,05 bis 1 Gewichtsprozent Fluortenside sind

und gewünschtenfalls

1,5 bis 8 Gewichtsprozent anoxidiertem Polyethylen und/oder Copolymere aus Styrol und Maleinsäureanhydrid

zur konservierenden Nachbehandlung von anodisierten Aluminiumoberflächen.

Ein weiterer Gegenstand der Erfindung ist ein Tauchverfahren, bei dem Aluminiumteile in eine derartige mit Wasser auf einen Feststoffgehalt von 0,5 bis 10 Gewichtsprozent verdünnte Dispersion eingetaucht und nach Abtropfen getrocknet werden.

Die erfindungsgemäß eingesetzten Polymer-Dispersionen enthalten als wichtigsten Bestandteil ein Acrylat- Copolymer aus 1 bis 15 Gewichtsteilen bezogen auf Copolymer säuregruppenhaltigen Monomeren, 30 bis 69 Gewichtsteilen Monomeren, die Homopolymere mit Glastemperatur unter 20 °C bilden, vorzugsweise Estern der Acrylsäure mit $C_1$-$C_8$ Alkoholen und/oder der Methacrylsäure mit $C_4$ bis $C_8$ Alkoholen und 30 bis 69 Gewichtsteile Comonomeren, die Homopolymere mit Glastemperatur über Raumtemperatur bilden, vorzugsweise Methacrylsäureester von $C_1$ bis $C_3$ Alkoholen oder Styrol.

Als säuregruppenhaltige Comonomere können ethylenisch ungesättigte Carbonsäuren oder ethylenisch ungesättigte Säuren des Schwefels eingesetzt werden. Als ethylenisch ungesättigte Carbonsäuren kommen in erster Linie Acrylsäure, Methacrylsäure in Frage, aber auch Itaconsäure, Maleinsäure und deren Halbester. Beispiele für ungesättigte Säuren des Schwefels sind 2-Acrylamido-2-methylpropansulfonsäure (AMPS) oder auch Vinylsulfonsäure. Alle säuregruppenhaltige Comonomere können auch als Alkali oder Ammoniumsalze vorliegen.

An Comonomeren mit Glastemperatur < 20 °C, also Glastemperatur unter Raumtemperatur (bezogen jeweils auf Homopolymere eines Monomeren) sind Ester der Acrylsäure mit $C_1$-$C_8$-Alkoholen und Ester der Methacrylsäure mit $C_4$-$C_8$-Alkoholen zu nennen. So können hier der Methyl-Ethyl-, Propyl-, Butyl- oder 2-Ethylhexylester der Acrylsäure wie auch der Butyl-, Hexyl- oder 2-Ethylhexylester der Methacrylsäure eingesetzt werden. Comonomere, deren Homopolymere Glastemperaturen über Raumtemperatur aufweisen, sind Ester der Methacrylsäure mit $C_1$-$C_3$-Alkoholen, wie beispielsweise Methylmethacrylat oder Ethylmethacrylat. Ein besonders wichtiges Comonomer, dessen Homopolymer eine Glastemperatur über Raumtemperatur aufweist, ist Styrol. Dabei hat sich gezeigt, daß sich die erfindungsgemäße Verwendung besonders günstig gestaltet, wenn das Acrylatcopolymere Styrol aufweist. Die erfindungsgemäß eingesetzten Copolymeren können jeweils nur ein Monomer aus einer der 3 Klassen enthalten oder mehrere. Besonders günstige Kombinationen sind:

Acrylsäure, Butylacrylat, Methylmethacrylat; Methacrylsäure, Ethylacrylat, Methylmethacrylat; Acrylsäure, Butylacrylat, Styrol; Acrylsäure, Butylacrylat, Methylmethacrylat, Styrol.

Die jeweiligen Verhältnisse von Comonomeren, deren Homopolymere Glastemperaturen unter Raumtemperatur aufweisen und Monomeren, deren Homopolymere Glastemperaturen über Raumtemperatur aufweisen, sind so einzustellen, daß die Filmbildungstemperatur der Polymerdispersion im Bereich zwischen 30 und 90 °, vorzugsweise zwischen 40 und 70 °C liegt. Dabei gilt das allgemeine Wissen der Polymerchemie. Die genannten Filmbildungstemperaturen beziehen sich auf das weichmacherfreie System, d.h. auf die Ausgangspolymerdispersion ohne weitere Zusätze.

Die Copolymeren werden zweckmäßigerweise durch Emulsionspolymerisation der verschiedenen Monomeren in den entsprechenden Mengen hergestellt. Dabei können Kettenübertragungsmittel mitverwendet werden. Derartige Kettenübertragungsmittel senken das Molekulargewicht, wobei sich gezeigt hat, daß bei Verwendung von Polymerdispersionen, die in Gegenwart von Kettenübertragungsmittel hergestellt worden sind, letztendlich überzüge mit höherem Glanz resultieren. Geeignete Kettenübertragungsmittel sind beispielsweise aliphatische Mercaptane mit 4 bis 12 C-Atomen z.B. lineare oder verzweigte $C_{12}$ Mercaptane sowie halogenierte Kohlenwasserstoffe, wie beispielsweise Trichlormethan, Tetrachlormethan, Tetrachlorethylen, Triflourmethan oder Butylchlorid. Andere Kettenübertragungsmittel sind Thioglycolsäure sowie Isopropylbensol oder Mercaptoethanol.

Übliche Emulsionspolymerisationsmethoden werden in den US-Patentschriften 2.754.280 und 2.795.564 beschrieben. Eine Polymerisation unter Verwendung eines Kettenübertragungsmittels wird von E.H. Riddle, "Monomeric Acrylic Esters" auf den Seiten 56 folgende (Reinhold Publishing Corp., New York, N.Y. 1954) beschrieben. Die Monomeren können unter Verwendung eines anionischen, kationischen oder eines nichtionischen Dispergiermittels emulgiert werden, wobei 0,5 bis 10 Gewichtsprozent, bezogen auf das Gewicht der gesamten Monomeren an Emulgiermitteln eingesetzt werden. Das saure Monomere ist üblicherweise in Wasser löslich, so daß das Dispergiermittel zur Emulgierung der anderen Monomeren dient. Ein Polymeri sationsinitiator des freie Radikale liefernden Typs, wie beispielsweise Ammonium- oder Kaliumpersulfat, kann allein oder in Verbindung mit einem Beschleuniger wie beispielsweise Kaliummethabisulfit oder Natriumthiosulfat eingesetzt werden. Organische Peroxide, wie beispielsweise Benzoylperoxid oder tert-Butylhydroperoxid sind ebenfalls geeingnete Initiatoren. Der Initiator und der Beschleuniger gewöhnlich der einfachheithalber als Katalysator bezeichnet, können in Mengen von 0,1 bis 3 Gewichtsprozent, jeweils bezogen auf das Gewicht der zu copolymerisierenden Monomeren verwendet werden. Die Polymerisationstemperatur kann zwischen Raumtemperatur und dem Siedepunkt der Monomeren liegen. Üblicherweise wird um 60 °C polymerisiert.

Einige Dispergiermittel, die zur Durchführung von Emulsionspolymerisationen geeignet sind, gehören zu den anionischen Typen. Beispielsweise seien die Natriumsalze der von Fettalkoholsulfaten, Alkylphenolsulfaten, Alkylbenzolsulfaten von Sulfaten ethoxylierter Fettalkohole oder ethoxylierter Alkylphenole, Sulfobernsteinsäurehalbester und -ester von Fettalkoholen, Alkylphenolen oder ethoxylierten Fettalkoholen oder ethoxylierten Alkylphenolen erwähnt. Außerdem können nichtionische Emulgatoren mitverwendet werden, beispielsweise Ethylenoxidaddukte an Alkylphenole, Fettalkohole oder Polypropylenglykole.

Der Polymergehalt der erfindungsgemäß eingesetzten Polymerdispersionen liegt zwischen 5 und 40 Gewichtsprozent. Bevorzugt sind 15 bis 30 Gewichtsprozent. Diese Angaben beziehen sich auf die Stammdispersion. Dabei steht es dem Fachmann frei, diese Stammdispersion je nach Anwendungsfall weiter zu verdünnen. So haben sich beim Tauchverfahren Dispersionen mit einem Feststoffgehalt (Gesamtgehalt an nicht wässrigen Bestandteilen) von nur 0,5 bis 10 % bewährt.

Die organischen Salze zweibindiger Metalle können entweder als solche oder als Komplexe mit Ammoniak oder Aminen eingesetzt werden. Geeignete Salze leiten sich von den folgenden Metallen ab: Beryllium, Cadmium, Kupfer, Calcium, Magnesium, Zink, Zirkon, Barium, Strontium, Kobalt, Eisen und Nickel. Bevorzugt sind die Magnesium-, Zink-und Zirkon-Verbindungen. Voraussetzung für die Verwendbarkeit ist eine merkliche Wasserlöslichkeit der Verbindung. Die Auswahl des geeigneten Metalls sowie des Anions richtet sich daher nach der Löslichkeit des erhaltenen Metallsalzes oder des Metallkomplexes, um zu gewährleisten, daß eine ausreichende Beständigkeit der Formulierung erreicht wird. Bevorzugt sind die Ammoniak- und Aminkomplexe des Zink und des Zirkon. Amine, welche in dieser Weise zur Komplexbildung geeignet sind, sind beispielsweise Morpholin, Monoethanolamin, Diethanolamin und Ethylendiamin. Geeignete Anionen sind beispielsweise Acetat, Glutamat, Formiat, Carbonat, Salicilat, Glycolat, Octoat, Benzoat, Gluconat, Oxalat und Lactat. Mehrwertige Metallchelate, in welchen der Ligand eine zweizählige Aminosäure ist, wie beispielweise Glycin oder Alanin können ebenfalls verwendet werden. Die mehrwertigen Metallverbindungen müssen derartig ausgewählt sein, daß das Metall dazu in der Lage ist, seine vernetzende Funktion auszuüben d.h., daß die Metallverbindung unter Bildung von Ionen welche mehrwertige Metalle enthalten zu dissoziieren vermag. Darüber hinaus sind die Formulierungen so abzustimmen, daß die konfektionierten Polymerdispersionen lagerstabil sind.

Nach einer besonders bevorzugten Ausführungsform der Erfindung werden Zinkammoniumacetat, Zinkammonium carbonat oder Zirkonylammoniumcarbonat eingesetzt. Dazu stellt man zweckmäßigerweise Komplexsalzlösungen mit etwa 5 bis 10 Gewichtsprozent Zink oder Zirkonium her. Diese Lösungen werden bereitet, indem man ein Zink- oder Zirkoniumsalz, vorzugsweise das Acetat beziehungsweise Carbonat in Wasser löst, Ammoniumhydroxid zusetzt und das Gemisch solange rührt bis die Lösung praktisch klar ist. Die organischen Salze zweibindiger Metalle werden in solchen Mengen eingesetzt, daß das Verhältnis des mehrwertigen Metalls zu der ethylenisch ungesättigten Säure des Copolymeren von 0,05 bis 0,5 und vorzugsweise von ungefähr 0,2 bis 0,3 schwankt. Dies wird als das Verhältnis von Metall, beispielsweise $Zn^{2+}$ zu den Gruppen -COOH oder $-SO_3H$ ausgedrückt, wobei ein Verhältnis von 0,5 stöchiometrisch ist. Um dies zu erreichen, werden im allgemeinen 0,5 bis 3 Gewichtsprozent der organischen Metallsalze eingesetzt.

Die erfindungsgemäß eingesetzten Polymerdispersionen enthalten als weitere Komponente nichtflüchtige, permanente Weichmacher in Mengen von 0,5 bis 5 Gewichtsprozent. Geeignet sind Phthalsäureester, Phosphorsäureester, Ester acyclischer, aliphatischer Dicarbonsäuren sowie Polyester aliphatische und/oder aromatische Dicarbonsäuren mit Molekulargewicht zwichen 850 und 8000, Fettsäureester und/oder Zitronensäureester. Beispiele sind: Benzyl-, Butylphthalat, Dibutylphthalat, Dimethylphthalat, Triphenylphosphat, 2-Ethylhexylbenzylphthalat, Butylcyclohexylphthalat, gemische Benzoesäure- und/oder Fettsäureester von Pentaerythrit, Poly(propylenadipat)-dibenzoat, Diethylenglycoldibenzoat, Caprolactam, Tetrabutylthiodisuccinat, Butylphthalylbutylglycolat, Acetyltributylzitrat, Benzylsebacat, Trikresylphosphat, Toluolethylsulfonamid, Tributoxyethylphosphat und/oder Tributylphosphat.

Die erfindungsgemäß eingesetzten Polymerdispersionen enthalten weiterhin flüchtige (temporäre) Weichmacher in Mengen von 1 bis 25 Gewichtsprozent, bezogen auf Dispersion, vorzugsweise von 5 bis 25 Gewichtsprozent und insbesondere von 5 bis 20 Gewichtsprozent. Geeignet sind die Mono- oder Dialkylether von Ethylenglycol, Propylenglycol, deren Dimeren oder Trimeren mit $C_1$ bis $C_6$ Alkoholen sowie die Glycole selbst. Beispiele für flüssige, temporäre Weichmacher (oder auch Verlaufsmittel genannt) sind die Monobutyl-, Monoethyl- oder Monomethylether oder andere Monoalkylether von Diethylenglykol oder Dipropylenglykol, Isophoron, Benzylalkohol, Diglym, Butylcellusolve oder 3-Methoxybutanol-1. Diese Produkte können ganz allgemein als in Wasser lösliche hochsiedende (ungefähr 150 bis 200°C) einwertige oder mehrwertige Alkohole sowie als niedrige ($C_1$-$C_5$-Alkyl) Monoether und Diether von Glykolen und Diglykolen bezeichnet werden.

Die erfindungsgemäß einzusetzenden Polymerdispersionen enthalten weiterhin 0,2 bis 5 Gewichtsprozent anionischer und/oder nichtionischer Tenside von denen bezogen auf Gesamtdispersion 0,05 bis 1 Gewichtsprozent Fluortenside sind. Diese setzen sich zusammen aus dem Tensidanteil der Ausgangspolymerdispersion, dem Tensidanteil der Ausgangswachsdispersion und gewünschtenfalls weiterer Tensidmengen. Geeignet sind hier die bei der Emulsionspolymerisation eingesetzten anionischen und/oder nichtionischen Tenside. So können insbesondere die zuvor erwähnten Ethoxylate von Fettalkoholen, insbesondere Kokosalkohol oder Talgalkohol sowie Ethoxylate von Alkylphenolen z.B. Octyl- oder Monylphenolen eingesetzt werden. Geeignete Ethoxylate enthalten pro mol langkettiger Komponente 2 bis 20, insbesondere 5 bis 10 Einheiten Ethylenoxid. Geeignet sind fernerhin die Sulfate und/oder Solfonate der zuvor genannten nichtionischen Emulgatoren, oder ihrer nicht ethoxylierten Ausgangsprodukte oder Alkylbenzolsulfonat.

Zur Erzielung einer gleichmäßigen Oberfläche ist insbesondere die Mitverwendung von Alkylbenzolsulfonaten mit 8 bis 12 C-Atomen in der Alkylkette bevorzugt.

Die erfindungsgemäß eingesetzten Polymerdispersionen enthalten weiterhin Fluortenside. Geeignet sind hier Verbindungen mit einer perfluorierten Alkylkette der Kettenlänge $C_6$–$C_{12}$ und einer hydrophilen Gruppe beispielsweise einer COOH-Gruppe, $SO_3H$-Gruppe und/oder $CONR_2$-Gruppe, insbesondere CONHR-Gruppe, in der R niedrig Alkyl ($C_1$–$C_3$, nicht fluoriert) oder Wasserstoff bedeutet.

Nach einer weiteren Ausführungsform der Erfindung können die einzusetzenden Polymerdispersionen 1,5 bis 8 Gewichtsprozent eines anoxidierten Polyethylens enthalten. Dabei handelt es sich um ein Niederdruckpolyethylen, das vorzugsweise nach dem Phillips-Verfahren hergestellt wurde und nach einer oxidativen Crackung eine Kettenlänge von durchschnittlich 200 bis 800 C-Atomen und ein Molekulargewicht von etwa 1000 bis 10 000, vorzugsweise von 2000 bis 5000 aufweist. Die Herstellung dieses Materials kann nach der DE-A 2 035 706 geschehen. Bevorzugt ist die Verwendung eines praktisch linearen, kristallinen, harten und dichten Polyethylens mit hohem Erweichungspunkt. Diese Charakteristika bleibt dem oxidierten Polyethylen enthalten, so daß vorzugsweise Produkte verwendet werden mit in etwa den folgenden Eigenschaften:

Härte: 0,5 dmm (Nadel-Penetrometerhärte nach ASTM D 1321 [D-5], 100 g/5 sec/25°C)

Erweichungspunkt: 138 bis 147°C (nach ASTM E-28) $D_{20}$: 0,99

Viskosität: 9000 cP (149°C nach Brookfield) bzw. 1500 cP bei 140°C.)

Das anoxidierte Polyethylen wird erfindungsgemäß in emulgierter Form eingesetzt. Dazu wird das Wachs in Gegenwart eines nichtionogen Emulgators und eines Neutralisationsmittels sowie gewünschtenfalls eines längerkettigen Glykolethers unter Druck bein erhöhter Temperatur emulgiert. Eine typische Wachsemulsion besteht beispielsweise aus: Polymerwachs 19,1 Gewichtsprozent Octylphenol-10 Ethylenoxid 4,7 Gewichtsprozent Ethylenglykolmonobutylether 2,2 Gewichtsprozent Kaliumhydroxid 0,5 Gewichtsprozent Natriumthiosulfat 0,2 Gewichtsprozent entmineralisiertes Wasser 73,3 Gewichtsprozent In jedem Falle wird der Emulgiervorgang oberhalb des Schmelzpunktes des Wachses durchgeführt. So läßt sich die vorgenannte Mischung bei 130 °C unter dem Dampfdruck des Systems emulgieren.

Die erfindungsgemäß einzusetzenden Polymerdispersionen können weiterhin 1,5 bis 8 Gewichtsprozent eines Copolymeren aus Styrol und Maleinsäurehydrid mit einem Gehalt von 20 bis 50 mol % Maleinsäureanhydrid-Einheiten, Maleinsäure-Einheiten oder deren Alkali- oder Ammoniumsalzen enthalten. Geeignet sind hier Produkte mit relativ geringem Molekulargewicht, insbesondere Molekulargewicht zwischen 1500 und 3500 und einer durchschnittlichen Säurezahl zwischen 200 and 300. Dabei ist es insbesondere bevorzugt, die Ammoniumsalze einzusetsen.

Die erfindungsgemäß eingesetzten Polymerdispersionen sollen einen pH-Wert von 6 bis 9, insbesondere von 7 bis 8,5 aufweisen. Dazu werden überschüssige Säuregruppen mit Alkalihydroxid, Ammoniumhydroxid oder mit Aminen neutralisiert. Bevorzugt ist die Neutralisation mit Ammoniak.

Die erfindungsgemäß eingesetzten Polymerdispersionen können zur konservierenden Nachbehandlung von Aluminium eingesetzt werden. Unter Aluminium wird hier in erster Linie eloxiertes Aluminium verstanden. Darunter fallen auch die üblichen Legierungen, in denen Aluminium den Hauptbestandteil darstellt oder die zumindest Aluminium ähnlichen Charakter aufweisen. Auch Aluminiumteile mit einer nicht verdichteten oder mit einer nicht durch anodische Oxidation hergestellten Oberfläche können konserviert werden.

Zur Durchführung der Behandlung verdünnt man die Polymerdispersionen mit Wasser auf einen Feststoffgehalt von 10 bis 25 Gewichtsprozent und bringt sie durch Wische, Bürsten oder mit Schwämmen auf die zu behandelnden Teile auf. Nach einer weiteren Ausführungsform der Erfindung können die Aluminiumteile auch in die Dispersion eingetaucht werden. Dabei hat es sich als vorteilhaft erwiesen, die Dispersionen auf einen noch tieferen Feststoffgehalt, etwa auf einen Feststoffgehalt von 0,5 bis 10 Gewichtsprozent, insbesondere ein Feststoffgehalt von 1 bis 3 Gewichtsprozent mit Wasser zu verdünnen. Die eingetauchten Teile läßt man nach der Behandlung abtropfen und trocknen.

Beispiele

1. Herstellung von Grunddispersionen Nach bekannten Emulsionspolymerisations-Verfahren, so zum Beispiel nach Beispiel 4 der EP-A-140 320 und unter Verwendung üblicher Hilfsstoffe werden Polymerdispersionen mit einem Feststoffgehalt von 40 Gewichtsprozent aus den folgenden Monomeren hergestellt (Angaben in Gewichtsprozent).

1a
60 % Styrol
35 % Butylacrylat
5 % Acrylsäure
1b
50 % Styrol
30 % Butylacrylat
17 % Ethylacrylat
3 % Methacrylsäure

1c
40 % Styrol
58 % Ethylacrylat
2 % ACrylsäure
1d
50 % Methylmethacrylat
25 % Butylacrylat
20 % Ethylacrylat
5 % Methacrylsäure
1e
50 % Methylmethacrylat
30 % Ethylacrylat
19 % Butylacrylat
1 % Acrylsäure
1f
60 % Methylmethacrylat
39 % Butylacrylat
1 % Methacrylsäure.

Die Dispersionen a bis f wurden mit Ammoniak auf pH 8 bis 9 eingestellt. Es wurde sodann eine ammoniakalische Zinkacetatlösung (etwa 10 Gewichtsprozent $Zn(NH_3)_4(CH_3COO)_2$)zugegeben in einer Menge von 1 mol Zn pro 2,5 mol COOH-Gruppen und auf einen Feststoffgehalt von 25 Gewichtsprozent verdünnt.

2. Zur Herstellung der erfindungsgemäß zu verwendenden Polymerdispersion wurden gemischt:
   75 Gewichtsprozent Polymerdispersion a bis f, Zn-haltig
   3 Gewichtsprozent Tributoxyethylphosphat
   5 Gewichtsprozent Ethylenglykolmonobutylether
   1 Gewichtsprozent Nonylphenol 10 EO
   3 Gewichtsprozent Alkylbenzolsulfonat
   0,1 Gewichtsprozent $C_8F_{17}$ COOK sowie Wasser zur Ergänzung auf 100 Gewichtsprozent.

3. Nach der DE-AS 1943958, Beispiel 2 wurde eine Emulsion eines anoxidierten Polyethylens mit 12 % Feststoffgehalt hergestellt.

4. Beispiel 2 a bis f wurden wiederholt, jedoch wurden statt 75 Gewichtsteile der Polymerdispersion a bis f nur 60 Gewichtsteile verwendet sowie 15 Gewichtsteile der Wachsdispersion nach Beispiel 3.

5. Beispiel 4 wurde wiederholt, jedoch wurden die 15 Gewichtsteile der Wachsemulsion durch 15 Gewichtsteile einer 30 %igen amoniakalischen Lösung eines Copolymer aus Styrol, Maleinsäure und Maleinsäure, monomethylester (Monomer-Gewichtsverhältnis 4 : 1 : 1) Molekulargewicht ca. 2000 ersetzt.

6. Die Dispersionen 2 a bis f, 4 a bis f und 5 a bis f wurden auf braune Fassadenplatten aus elektrolytisch oxidiertem Aluminium mit Hilfe eines Schwammes aufgetragen. Nach Trocknen Entstanden gleichmäßige schmutzabweisende Überzüge.

7. Die Dispersionen nach den Beispielen 2, 4 und 5 wurden im Verhältnis 1 : 5 beziehungsweise 1 : 10 mit einer 0,5 gewichtsprozentigen Alkylbenzolsulfonatlösung verdünnt. Darin eingetauchte Teile aus eloxiertem Aluminium zeigten nach Abtropfen und Trocknen einen gleichmäßigen Überzug, der sich bei Außenbewitterung schmutzabweisend und schützend erwies.

## Patentansprüche

1. Verwendung einer wässrigen Polymerdispersion aus
90 bis 40 Gewichtsprozent Wasser
5 bis 40 Gewichtsprozent eines säuregruppenhaltigen Acrylatcopolymeren mit einer minimalen Filmbildungstemperatur zwischen 30 und 90°C bestehend aus
30 bis 69 Gewichtsprozent Estern der Acrylsäure mit $C_1$ bis $C_8$-Alkoholen und/oder Estern der Methacrylsäure mit $C_4$ bis $C_8$-Alkoholen
30 bis 69 Gewichtsprozent eines oder mehrerer Monomere ausgewählt aus der Gruppe, die Styrol und die Ester der Methacrylsäure mit $C_1$–$C_3$-Alkoholen umfaßt.
1 bis 15 Gewichtsprozent eines säuregruppenhaltigen Comonomeren ausgewählt aus der Gruppe Acrylsäure, Methacrylsäure, Maleinsäurehalbester, Itaconsäure und/oder 2-Acrylamido-2-methylpropansulfonsäure und/oder deren Alkali- oder Ammoniumsalzen
0,5 bis 3 Gewichtsprozent organischen Salzen zweibindiger Metalle
0,5 bis 5 Gewichtsprozent nichtflüchtigen, permanenten Weichmachern
1 bis 25 Gewichtsprozent flüchtigen Weichmachern
0,2 bis 5 Gewichtsprozent anionischen und/oder nichtionischen Tensiden, von denen bezogen auf Gesamtdispersion 0,05 bis 1 Gewichtsprozent Fluortenside sind und gewünschtenfalls
1,5 bis 8 Gewichtsprozent anoxidiertem Polyethylen und/oder Copolymere aus Styrol und Maleinsäureanhydrid
zur konservierenden Nachbehandlung von anodisierten Aluminiumoberflächen.

2. Ausführungsform nach Anspruch 1, dadurch gekennzeichnet, daß als Acrylatcopolymer ein Copolymer mit einer der folgenden Zusammensetzungen eingesetzt wird:
Acrylsäure, Butylacrylat, Methylmethacrylat; Methacrylsäure, Ethylacrylat, Methylmethacrylat; Acrylsäure, Butylacrylat, Styrol; Acrylsäure, Butylacrylat, Methylmethacrylat, Styrol.

3. Ausführungsform nach den Ansprüchen 1 bis 2, dadurch gekennzeichnet, daß als organische Salze zweibindiger Metallkationen, organische Zink- und/oder Magnesiumsalze, insbesondere Zinkacetat eingesetzt werden.

4. Ausführungsform nach den Ansprüchen 1 bis 3, dadurch gekennzeichnet, daß als Weichmacher Phosphorsäureester, Ester acyclischer aliphatischer Dicarbonsäuren, Polyester aliphatischer und/oder aromatischer Dicarbonsäuren mit Molekulargewicht zwischen 850 und 8000, Fettsäureester und/oder Zitronensäureester eingesetzt werden.

5. Ausführungsform nach den Ansprüchen 1 bis 4, dadurch gekennzeichnet, daß die eingesetzten Dispersionen als flüchtige Weichmacher schwerflüchtige Lösungsmittel, enthalten.

6. Ausführungsform nach den Ansprüchen 1 bis 5, dadurch gekennzeichnet, daß die eingesetzten Dispersionen als flüchtige Weichmacher Ethylenglykol, Propylenglykol, dimeres Ethylenglykol, dimeres Propylenglykol, trimeres Ethylenglykol, trimeres Propylenglykol, Monoether des Ethylenglycols mit $C_1$ bis $C_6$-Alkoholen, Diether des Ethylenglycols mit $C_1$ bis $C_6$-Alkoholen und/oder Diether des Propylenglycols mit $C_1$ bis $C_6$-Alkoholen enthalten.

7. Ausführungsform nach den Ansprüchen 1 bis 6, dadurch gekennzeichnet, daß in den Polymerdispersionen als nichtionische Emulgatoren Ethoxylate von Fettalkoholen und/oder Alkylphenolen enthalten sind, und daß als anionische Emulgatoren die Sulfate und/oder Sulfonate der genannten nichtionischen Emulgatoren oder ihrer nicht ethoxilierten Ausgangsprodukte oder Alkylbenzolsulfonat enthalten sind.

8. Ausführungsform nach den Ansprüchen 1 bis 7, dadurch gekennzeichnet, daß als Fluortenside Verbindungen mit einer perfluorierten Alkylkette der Kettenlänge $C_6$ bis $C_{12}$ und einer COOH-Gruppe, $SO_3H$-Gruppe, und/oder $CONR_2$-Gruppe, in der R Niedrigalkyl oder H bedeutet, in den verwendeten Dispersionen enthalten sind.

9. Ausführungsform nach den Ansprüchen 1 bis 8, dadurch gekennzeichnet, daß das anoxidierte Polyethylen wachsartige Konsistenz aufweist und in druckemulgierter Form vorliegt.

10. Ausführungsform nach den Ansprüchen 1 bis 9, dadurch gekennzeichnet, daß das Copolymer aus Styrol und Maleinsäureanhydrid 20 bis 50 mol Prozent Maleinsäureanhydrideinheit, Maleinsäureeinheit oder deren Alkali- oder Ammoniumsalze enthält.

11. Ausführungsform nach den Ansprüchen 1 bis 10, dadurch gekennzeichnet, daß die Polymer-Dispersionen einen ph-Wert von 6 bis 9, insbesondere 7 bis 8,5 aufweisen.

12. Ausführungsform nach den Ansprüchen 1 bis 11, dadurch gekennzeichnet, daß man die Polymer-Dispersionen auf unbehandeltem Aluminium oder eloxiertem und insbesondere eloxiertem und verdichtetem Aluminium einsetzt.

13. Ausführungsform nach den Ansprüchen 1 bis 12, dadurch gekennzeichnet, daß man die Polymer-Dispersionen gewünschtenfalls nach Verdünnung auf einen Feststoffgehalt zwischen 10 und 25 Gewichtsprozent mit Wischern, Bürsten oder Schwämmen auf die zu behandelten Aluminiumteile aufträgt.

14. Ausführungsform nach den Ansprüchen 1 bis 13, dadurch gekennzeichnet, daß man die zu behandelnden Aluminiumteile in die gewünschtenfalls auf einen Feststoffgehalt von 0,5 bis 10 Gewichtsprozent, insbesondere einem bis 3 Gewichtsprozent verdünnte Polymer-Dispersion eintaucht und sodann abtropfen und trocknen läßt.

## Claims

1. The use of an aqueous polymer dispersion of
90 to 40% by weight water,
5 to 40% by weight of an acrylate copolymer containing acid acid groups and having a minimum film-forming temperature of 30 to 90°C which consists of 30 to 69% by weight of esters of acrylic acid with $C_1$–$C_8$ alcohols and/or esters of methacrylic acid with $C_4$–$C_8$ alcohols

30 to 69% by weight of one or more monomers selec-from the group consisting of styrene and esters of methacrylic acid with $C_1$–$C_3$ alcohols,

1 to 15% by weight of a comonomer containing acid acid groups selected from the group consisting of acrylic acid, methacrylic acid, maleic acid semi-esters, itaconic acid and/or 2-acrylamido-2-methyl propanesulfonic acid and/or alkali or ammonium salts thereof,

0.5 to 3% by weight organic salts of two-bond metals,

0.5 to 5% by weight non-volatile, permanent plasticizers,

1 to 24% by weight volatile plasticizers,

0.2 to 5% by weight anionic and/or nonionic surfactants, of which from 0.05 to 1% by weight, based on the dispersion as a whole, are fluorine surfactants and, if desired,

1.5 to 8% by weight oxidized polyethylene and/or copolymers of styrene and maleic anhydride, for the preserving aftertreatment of anodized aluminium surfaces.

2. The use claimed in claim 1, characterized in that a copolymer having one of the following compositions is used as the acrylate copolymer: acrylic acid, butyl acrylate, methyl methacrylate; methacrylic acid, ethyl acrylate, methyl methacrylate; acrylic acid, butyl acrylate, styrene; acrylic acid, butyl acrylate, methyl methacrylate, styrene.

3. The use claimed in claims 1 and 2, characterized in that zinc and/or magnesium salts, particularly zinc acetate, are used as the organic salts of two-bond metal cations.

4. The use claimed in claims 1 to 3, characterized in that phosphoric acid esters, phthalic acid esters, esters of acyclic aliphatic dicarboxylic acids, polyesters of aliphatic and/or aromatic dicarboxylic acids having molecular weights of 850 to 8000, fatty acid esters and/or citric acid esters are used as plasticizers.

5. The use claimed in claims 1 to 4, characterized in that the dispersions used contain solvents of low volatility as volatile plasticizers.

6. The use claimed in claims 1 to 5, characterized in that the dispersions used contain as volatile plasticizers ethylene glycol, propylene glycol, dimeric ethylene glycol, dimeric propylene glycol, trimeric ethylene glycol, trimeric propylene glycol, monoethers of ethylene glycol with $C_1$–$C_6$ alcohols.

7. The use claimed in claims 1 to 6, characterized in that the polymer dispersions contain as nonionic emulsifiers ethoxylates of fatty alcohols and/or alkyl phenols and in that the anionic emulsifiers present are the sulfates and/or sulfonates of the above-mentioned nonionic emulsifiers or their non-ehtoxylated starting products or alkylbenzene sulfonate.

8. The use claims 1 to 7, characterized in that compounds containing a perfluorinated $C_6$–$C_{12}$ alkyl chain and a COOH group, $SO_3H$ group and/or $CONR_2$ group (R = lower alkyl or H) are present as fluorine surfactants in the dispersions used.

9. The use claimed in claims 1 to 8, characterized in that the oxidized polyethylene has a wax-like consistency and is present in presure-emulsified form.

10. The use claimed in claims 1 to 9, characterized in that the copolymer of styrene and maleic anhydride contains from 20 to 50 mole% of maleic anhydride units, maleic acid units or alkali or ammonium salts thereof.

11. The use claimed in claims 1 to 10, characterized in that polymer dispersions have a pH value of from 6 to 9 and, more particularly, from 7 to 8.5.

12. The use claimed in claims 1 to 11, characterized in that the polymer disporsions are used on untreated aluminium or electrolytically and, more particularly, electrolytically oxidized and sealed aluminium.

13. The use claimed in claims 1 to 17, characterized in that polymer dispersions are applied to the aluminium components to be treated using cloths, brushes or sponges, if desired after dilution to a solids content of from 10 to 25% by weight.

14. The use claimed in claims 1 to 13, characterized in that aluminium components to be treated are immersed in the polymer dispersion – if desired, diluted to a solids contend of from 0.5 to 10% by weight and, more particularly, from 1 to 3% by weight – and, after draining, are dried.

**Revendications**

1. Utilisation d'une dispersion aqueuse de polymère constituée de

90 à 40% en poids d'eau,

5 à 40% en poids d'un copolymère d'acrylate contenant des groupes acides, ayant une température minimale de formation de feuil comprise entre 30 et 90°C, constitué de

30 à 69% en poids d'esters de l'acide acrylique avec des alcools en $C_1$–$C_8$ et/ou d'esters de l'acide méthacrylique avec des alcools en $C_4$–$C_8$, de

30 à 69% en poids d'un ou plusieurs monomères choisis (s) groupe comprenant le styrène et les esters de l'acide méthacrylique avec de alcools en $C_1$–$C_3$, de

1 à 15% en poids d'un comonomère contenant des groupes acides, choisi parmi l'acide acrylique, l'acide méthacrylique, un hémi-ester d'acide maléique, l'acide itaconique et/ou l'acide · 2-acrylamido 2-méthylpropanesulfonique et/ou leurs sels alcalins our d'ammonium, de

0,5 à 3% en poids de sels organiques de métaux bivalents, de

0,5 à 5% en poids de plastifiants permanents non volatils, de

1 à 25% en poids d'agents tensioactifs anioniques et/ou non ioniques, dont de 0,05 à 1% en poids, par rapport à la dispersion totale, est constitué d'agents tensioactifs fluorés,

et éventuellement de

1,5 à 8% en poids de polyéthylène partiellement oxydé et/ou de copolymères de styrène et anhydride maléique, pour le post-traitement protecteur de surfaces d'aluminium anodisées.

2. Mode de réalisation selon la revendication 1 caractérisé en ce que, en tant que copolymère d'acrylate, on utilise un copolymère ayant l'une des compositions suivantes: acide acrylique, acrylate de butyle, méthacrylate de méthyle; acide méthacrylique, acrylate d'éthyle, méthacrylate de méthyle, acide acrylique, acrylate de butyle, styrène; acide acrylique, acrylate de butyle, méthacrylate de méthyle, styrène.

3. Mode de réalisation selon les revendications 1 et 2, caractérisé en ce que, en tant que sels organiques de cations bivalents, on utilise des sels organiques du zinc et/ou du magnésium, en particulier l'acétate de zinc.

4. Mode de réalisation selon l'une quelconque des revendications 1 à 3, caractérisé en ce que, en tant que plastifiant, on utilise des esters phosphoriques, des esters phtaliques, des esters d'acides dicarboxiliques aliphatiques et/ou aromatiques ayant un poids moléculaires compris entre 850 et 8000, des esters d'acides gras et/ou des esters d'acide citrique.

5. Mode de réalisation selon l'une quelconque des revendications 1 à 4, caractérisé en ce que les dispersions utilisées contiennent, en tant que plastifiants volatils, des solvants peu volatils.

6. Mode de réalisation selon l'une quelconque des revendications 1 à 5, caractérisé en ce que les dispersions utilisées contiennent, en tant que plastifiants volatils, de l'éthylèneglycol, du propylèneglycol, de l'éthyléneglycole dimère, du propylèneglycol trimère, du propylèneglycol trimère, un monoéther de l'éthylèneglycol avec des alcools en $C_1$–$C_6$, un diéther de l'éthylèneglycole avec des alcools en $C_1$–$C_6$ et/ou diéther du propylèneglycol avec des alcools $C_1$–$C_6$

7. Mode de réalisation selon l'une quelconque des revendications 1 à 6, caractérisé en ce que les dispersions de polymères contiennent, en tant qu'émulsifiants non ioniques, des produits d'oxièthylation d'alcools gras et/ou d'alkylphénols, et en ce qu'elles contiennent, en tant qu'émulsifiants anioniques, des sulfates et/ou sulfonates des émulsifiants non ioniques cités ou de leurs produits de départ non oxyéthylés, ou un alkylbenzènesulfonate.

8. Mode de réalisation selon l'une quelconque des revendications 1 à 7, caractérisé en ce que les dispersions utilisées contiennent, en tant qu'agents tensioactifs fluorés, des composés comportant une chaîne alkyle perfluorée ayant une longueur de chaîne en $C_6$ à $C_{12}$ et comportant un groupe COOH, un groupe $SO_3H$ et/ou un groupe $CONR_2$, dans lesquels R représente un groupe alkyle inférieur ou H.

9. Mode de réalisation selon l'une quelconque des revendications 1 à 8, caractérisé en ce que le polyéthylène partiellement oxydé présente une consistance cireuse et se trouve sous forme émulsionnée sous pression.

10. Mode de réalisation selon l'une quelconque des revendications 1 à 9, caractérisé en ce que le copolymère de styrène et anhydride maléique contient de 20 à 50% en mole de motifs anhydride maléique, de motifs acide maléique ou de ses sels alcalins ou d'ammonium.

11. Mode de réalisation selon l'une quelconque des revendications 1 à 10, caractérisé en ce que les dispersions de polymères présentent un pH de 6 à 9, en particulier de 7 à 8,5.

12. Mode de réalisation selon l'une quelconque des revendications 1 à 11, caractérisé en ce que l'on utilise les dispersions de polymères sur de l'aluminium non traité ou sur de l'aluminium anodisé et en particulier anodisé et colmaté.

13. Mode de réalisation selon l'une quelconque des revendications 1 à 12, caractérisé en ce que l'on applique par essuyage, brossage ou à l'éponge, sur les pièces en aluminium à traiter, les dispersions de polymères, si on le désire, après dilution jusqu'à une teneur en matière sèche comprise entre 10 et 25% en poids.

14. Mode de réalisation selon l'une quelconque des revendications 1 à 13, caractérisé en ce que l'on immerge les pièces en aluminium à traiter dans la dispersion de polymère, si on le désire diluée jusqu'à une teneur en matière sèche de 0,5 à 10% en poids, en particulier de 3% en poids, et on les égoutte ensuite puis on les sèche.